# EUROPEAN PATENT APPLICATION

(11) **EP 4 533 943 A1**
(43) Date of publication of application: **09.04.2025**
(21) Application number: 24198812.0
(22) Date of filing: 06.09.2024
(51) Int. Cl.: A01M 7/00

(54) **QUICK CONNECT DUAL COUPLER ASSEMBLY FOR A DROP-DOWN APPLICATOR ASSEMBLY OF AN AGRICULTURAL SPRAYER**

(30) Priority: 06.10.2023 US 202363542807 P; 30.04.2024 US 202418650301
(71) Applicant: Deere & Company, Moline, IL 61265 (US)
(72) Inventor: Thompson, Austin N, Clarion (US); Miller, Michael M, Clarion (US)
(74) Representative: Reddie & Grose LLP

(57) **Abstract**

An agricultural machine includes a chassis, a product tank, a support boom, and an applicator assembly including a frame and a nozzle. The frame has a first portion and a second portion. A coupler assembly is coupled between the support boom and the applicator assembly. The coupler assembly includes a first coupler portion having a female component and a collar, and a second coupler portion having an anti-rotational mechanism and a male component. The first coupler portion is coupled to the support boom and is in communication with the product tank. During assembly, the male component is inserted into the female component and the collar engages with the male component to mechanically couple the applicator assembly to the support boom and fluidly couple the nozzle to the product tank. The anti-rotational mechanism is coupled to the support boom to reduce rotational movement of the applicator assembly.

## Description

### RELATED APPLICATIONS

This application claims the benefit of U.S. Provisional Patent Application Ser. No. 63/542,807, filed on October 6, 2023, the disclosure of which is hereby incorporated by reference in its entirety.

### FIELD OF THE DISCLOSURE

The present disclosure relates to an agricultural sprayer, and in particular, to a drop-down applicator assembly for coupling to an agricultural sprayer.

### BACKGROUND

Agricultural machines, such as an agricultural sprayer, may include one or more drop-down applicator assemblies for delivering product at a location at or near a base of a crop planted in a field. The one or more drop-down applicator assemblies are connected to a spray boom of the agricultural sprayer.

### SUMMARY

In one implementation of the present disclosure, an agricultural machine moveable across a surface in a travel direction includes a chassis, a product tank coupled to the chassis, the product tank configured to store a product, a support boom coupled to the chassis, an applicator assembly comprising a frame and at least one nozzle, the frame having a first portion and a second portion, wherein the second portion is configured to be positioned in contact with or above the surface, and a coupler assembly coupled between the support boom and the first portion of the applicator assembly, the coupler assembly comprising a first coupler portion and a second coupler portion, wherein the first coupler portion is coupled to the support boom and comprises a female component and a collar, wherein the first coupler portion is in communication with the product tank, wherein the second coupler portion comprises an anti-rotational mechanism and a male component, wherein, during assembly, the male component is inserted into the female component and the collar engages with the male component to mechanically couple the applicator assembly to the support boom and fluidly couple the nozzle to the product tank, wherein the anti-rotational mechanism is coupled to the support boom to maintain an orientation of the applicator assembly with respect to the travel direction.

In one example of this implementation, the anti-rotational mechanism is coupled to the frame of the applicator assembly. In a second example, the anti-rotational mechanism includes a plurality of fingers that form a first recess and a second recess, the support boom being positioned within the first recess and the second recess when the anti-rotational mechanism is coupled to the support boom. In a third example, the support boom is coupled to the support boom with a press-fit, a snap-fit, or clamped connection. In a fourth example, the anti-rotational mechanism includes a first bracket portion and a second bracket portion, the first bracket portion and the second bracket portion being coupled to the support boom. In a fifth example, the first bracket portion and the second bracket portion are coupled to one another.

In a sixth example of this implementation, the male component and the anti-rotational mechanism are formed as an injection molded part. In a seventh example, the collar is movable in an axial direction defined along the first coupler portion and is rotatable about the female component. In an eighth example, a support flange is coupled to the support boom, the support flange including a first opening and a second opening defined therein; the anti-rotational mechanism including a first pin and a second pin, wherein, when the applicator assembly is coupled to the support boom, the first pin is disposed within the first opening and the second pin is disposed within the second opening, wherein the interconnection between the first pin and the second pin with the support flange maintains the orientation of the applicator assembly with respect to the travel direction. In a ninth example, a first fluid line fluidly is coupled between the product tank and the first coupler portion, and a second fluid line is fluidly coupled between the second coupler portion and the at least one nozzle.

In another implementation of the present disclosure, an applicator assembly configured to be coupled to a support boom of an agricultural machine that is moveable across a surface in a travel direction, the agricultural machine including a product tank for storing a product, the applicator assembly includes a frame having a first portion and a second portion, the second portion configured to be positioned in contact with or above the surface, a nozzle configured to be in fluid communication with the product tank, and a coupler assembly configured to be coupled between the support boom and the frame, the coupler assembly comprising a first coupler portion and a second coupler portion, wherein the first coupler portion is configured to be coupled to the support boom, the first coupler portion comprising a female component and a locking component, wherein the first coupler portion is configured to be in communication with the product tank, wherein the second coupler portion is coupled to the frame, the second coupler portion comprising an anti-rotational mechanism and a male component, wherein, the applicator assembly is configured to be mechanically and fluidly coupled to the agricultural machine when the male component is inserted into the female component and the locking component engages with the male component, wherein the anti-rotational mechanism is configured to be coupled to the support boom to maintain an orientation of the applicator assembly with respect to the travel direction.

In one example of this implementation, the anti-rotational mechanism is coupled to the frame. In a second example, the anti-rotational mechanism includes a plurality of fingers that form a first recess and a second recess, the anti-rotational mechanism configured to be coupled to the support boom by positioning the support boom within the first recess and the second recess. In a third example, the anti-rotational mechanism includes a first bracket portion and a second bracket portion, the first bracket portion and the second bracket portion configured to be coupled to the support boom. In a fourth example, the first bracket portion and the second bracket portion are coupled to one another.

In a fifth example, a fluid line fluidly is coupled between the second coupler portion and the nozzle. In a sixth example, the locking component is movable in an axial direction defined along the first coupler portion and is rotatable about the female component. In a seventh example, the locking component includes a locking collar, a cam-latch coupler, a key-latch coupler, or a twist-lock coupler.

In a further implementation of the present disclosure, a method is provided for coupling an applicator assembly to a support boom of an agricultural machine, the applicator assembly including a frame and at least one nozzle. The method includes providing an anti-rotational coupler assembly includes a first coupler portion and a second coupler portion, aligning a male component of the second coupler portion with a female component of the first coupler portion, inserting the male component into engagement with a female component, releasably coupling the first coupler portion to the second coupler portion via a locking component, engaging an anti-rotational mechanism with the support boom to maintain an orientation of the applicator assembly with respect to the support boom, wherein, releasably coupling the first coupler portion to the second coupler portion includes mechanically coupling the applicator assembly to the support boom and fluidly coupling the at least one nozzle to a product tank on the agricultural machine.

In one example of this implementation, releasably coupling the first coupler portion to the second coupler portion includes positioning the locking component into engagement with a groove formed in the male component.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings, wherein:
FIG. 1 is a perspective view of one example implementation of an agricultural sprayer including a plurality of drop-down applicator assemblies coupled along a rear-mounted support boom of the agricultural sprayer;
FIG. 2 is a perspective view of another example implementation of an agricultural sprayer including a plurality of drop-down applicator assemblies coupled along a front-mounted support boom of the agricultural sprayer;
FIG. 3 is a perspective view of a drop-down applicator assembly;
FIG. 4 is a rear view of the drop-down applicator assembly of FIG. 3 positioned between adjacent crop rows of an agricultural field;
FIG. 5 is a perspective view of a drop-down application assembly including a first implementation of a quick connect dual coupler assembly;
FIG. 6 is a perspective view of the quick connect dual coupler assembly of FIG. 5;
FIG. 7 is a perspective view of a fluid coupler assembly of the quick connect dual coupler assembly;
FIG. 8 is a perspective view of an anti-rotational coupling mechanism and fluid coupler of the quick connect dual coupler assembly disassembled from the fluid coupler assembly of FIG. 7;
FIG. 9 is a left side perspective view of the anti-rotational coupling mechanism of FIG. 8;
FIG. 10 is a right side perspective view of the quick connect dual coupler assembly of FIG. 4;
FIG. 11 is a front view of the quick connect dual coupler assembly of FIG. 5;
FIG. 12 is a perspective view of a drop-down application assembly including a second implementation of a quick connect dual coupler assembly;
FIG. 13 is a perspective view of an anti-rotational coupling mechanism and fluid coupler disassembled from a fluid coupler assembly of the quick connect dual coupler assembly of FIG. 12; and
FIG. 14 is a front perspective view of the quick connect dual coupler assembly of FIG. 12.

Corresponding reference numerals are used to indicate corresponding parts throughout the several views.

### DETAILED DESCRIPTION

For the purposes of promoting an understanding of the principles of the present disclosure, reference will now be made to the implementations described herein and illustrated in the drawings and specific language will be used to describe the same. It will nevertheless be understood that no limitation of the scope of the present disclosure is thereby intended, such alterations and further modifications in the illustrated devices and methods, and such further applications of the principles of the present disclosure as illustrated therein being contemplated as would normally occur to one skilled in the art to which the present disclosure relates. Terms of degree, such as "substantially," "about," "approximately," etc. are understood by those of ordinary skill to refer to reasonable ranges outside of the given value, for example, general tolerances associated with manufacturing, assembly, and use of the described implementations.

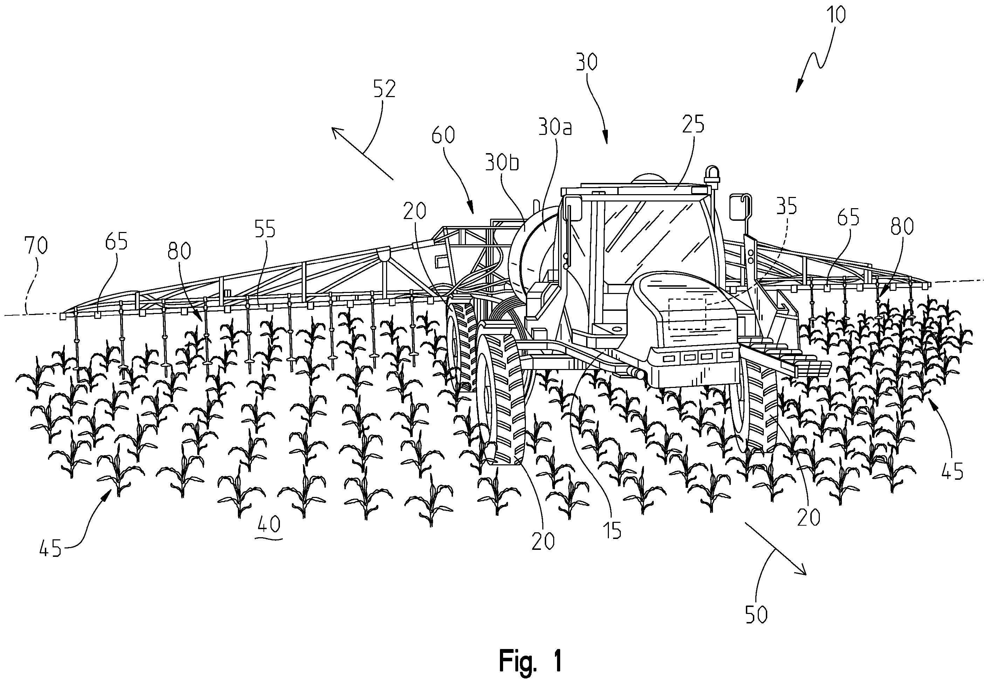

Referring to FIG. 1 of the present disclosure, an agricultural vehicle (e.g., an agricultural sprayer 10) is shown including a chassis 15 having a plurality of traction members such as wheels 20 to support a cab 25, one or more product tanks 30, and a power unit 35 (e.g., an engine, transmission, etc.) above an agricultural surface or ground 40. In this illustrated implementation, the ground 40 may be that of a crop field. The product tanks 30 may be configured to store agricultural product (e.g., liquid fertilizer, liquid pesticide, liquid fungicide, dry/solid forms of nutrients, dry/solid forms of protection products, agricultural seeds, etc.) to be distributed onto crops 45 growing from the ground 40 or directly onto the ground 40. The power unit 35 may provide mechanical, electrical, and hydraulic power to components of the sprayer 10. For example, the power unit 35 may at least drive one of the wheels 20 to move the sprayer 10 across the ground 40 in a forward direction 50 or a rearward direction 52. The power unit 35 may also operably drive a delivery device (e.g., a pump) to dispense the agricultural product within the product tanks 30 onto the ground 40. In other implementations, the traction members can be continuous tracks operable to move the sprayer 10 relative to the ground 40.

The sprayer 10 may include a support boom 55 coupled to the chassis 15 behind the product tanks 30 and the cab 25. In this implementation, the spray boom 55 is a rear-mounted spray boom positioned behind the cab 25 and product tanks 30. A hydraulic assembly 60 (e.g., hydraulic cylinders) may be coupled to the chassis 15 and the support boom 55 and is operable to raise and lower the support boom 55 relative to the chassis 15 and the ground 40. Spray nozzles 65 may be positioned along a longitudinal axis 70 of the support boom 55 with each spray nozzle 65 fluidly coupled to at least one or more of the product tanks 30. The spray nozzles 65 may be operable to dispense/spray the agricultural product stored from within at least one holding tank 30 onto the ground 40 and the crops 45.

As shown in FIG. 1, a plurality of drop-down applicator assemblies 80 may be positioned along the longitudinal axis 70 of the support boom 55. In particular, each applicator assembly 80 may be positioned and coupled between adjacent spray nozzles 65 to the support boom 55. Each applicator assembly 80 may be configured as a light-weight design to not overload the support boom 55.

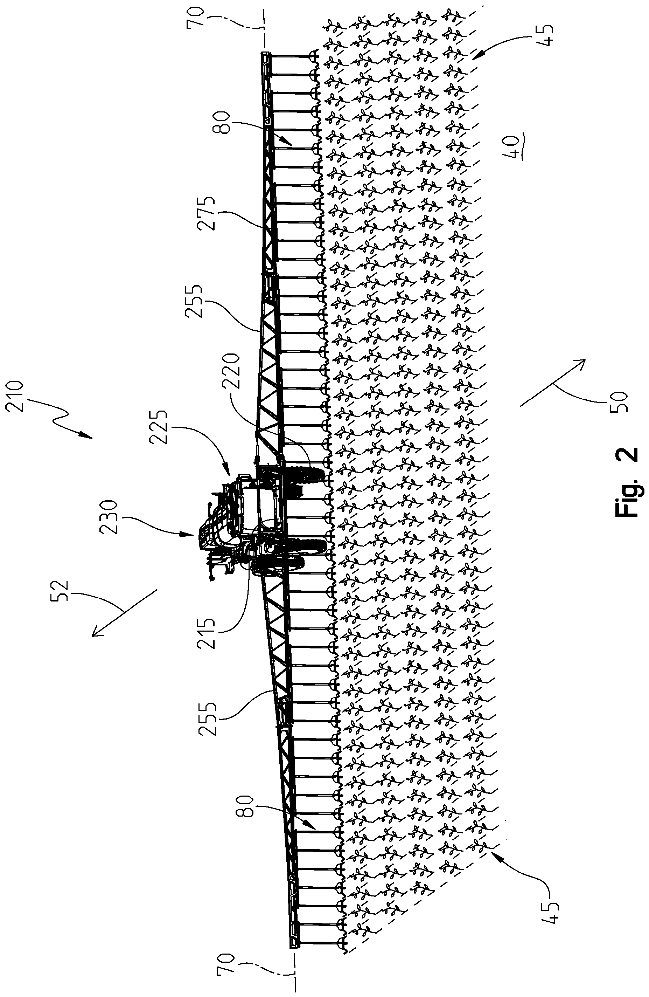

In other implementations, the support boom 55 can be positioned in front of the cab 25. In FIG. 2, for example, an agricultural vehicle (e.g., an agricultural sprayer 210) is shown including a chassis 215 having a plurality of traction members such as wheels 220 to support a cab 225, one or more product tanks 230, and a power unit (e.g., an engine, transmission, etc.) above an agricultural surface or ground 40. In this illustrated implementation, the ground 40 may be that of a crop field. The product tanks 30 may be configured to store agricultural product (e.g., liquid fertilizer, liquid pesticide, liquid fungicide, dry/solid forms of nutrients, dry/solid forms of protection products, agricultural seeds, etc.) to be distributed onto crops 45 growing from the ground 40 or directly onto the ground 40. The power unit may operably drive a delivery device (e.g., a pump) to dispense the agricultural product within the product tanks 30 onto the ground 40. In other implementations, the traction members can be continuous tracks operable to move the sprayer 210 relative to the ground 40.

The sprayer 210 may include a support boom 255 coupled to the chassis 215 in front of the product tanks 230 and the cab 225. In this implementation, the spray boom 255 is a front-mounted spray boom positioned forward of the cab 225 and product tanks 230. A hydraulic assembly (e.g., hydraulic cylinders) may be coupled to the chassis 215 and the support boom 255 and is operable to raise and lower the support boom 255 relative to the chassis 215 and the ground 40. Spray nozzles may be positioned along a longitudinal axis 70 of the support boom 255 with each spray nozzle fluidly coupled to at least one or more of the product tanks 230. The spray nozzles may be operable to dispense/spray the agricultural product stored from within at least one holding tank 230 onto the ground 40 and the crops 45.

Similar to FIG. 1, a plurality of drop-down applicator assemblies 80 may be positioned along the longitudinal axis 70 of the support boom 255 of the sprayer 210. In particular, each applicator assembly 80 may be positioned and coupled to the support boom 255 or to a spray pipe 275. The spray pipe 275 may be fluidly coupled to one or more of the product tanks 230.

In other implementations of the present disclosure, a pull-behind sprayer can include a frame and traction members that support the support boom 55 above the agricultural field 40 and is selectively coupled to a vehicle (e.g., a tractor) to be pulled across the agricultural field 40. In some implementations, the pull-behind sprayer can also include one or more product tanks 30.

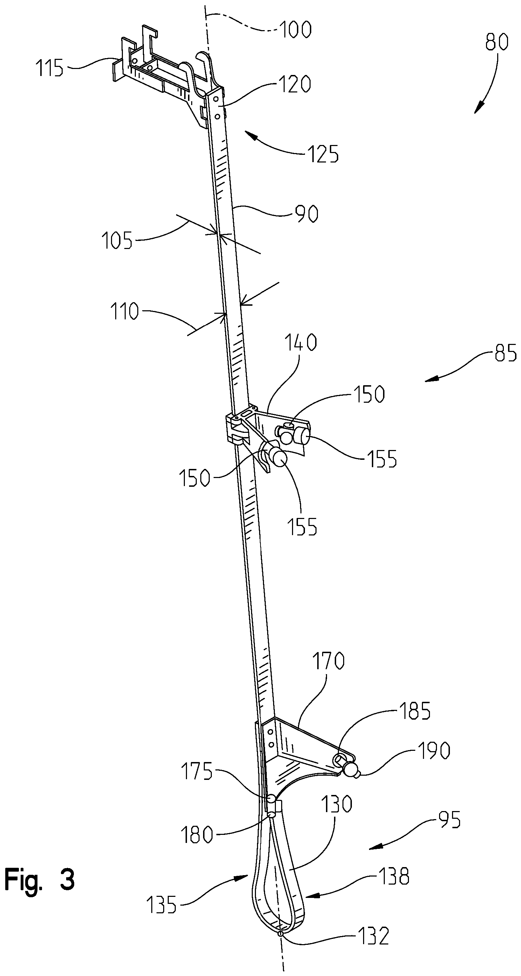

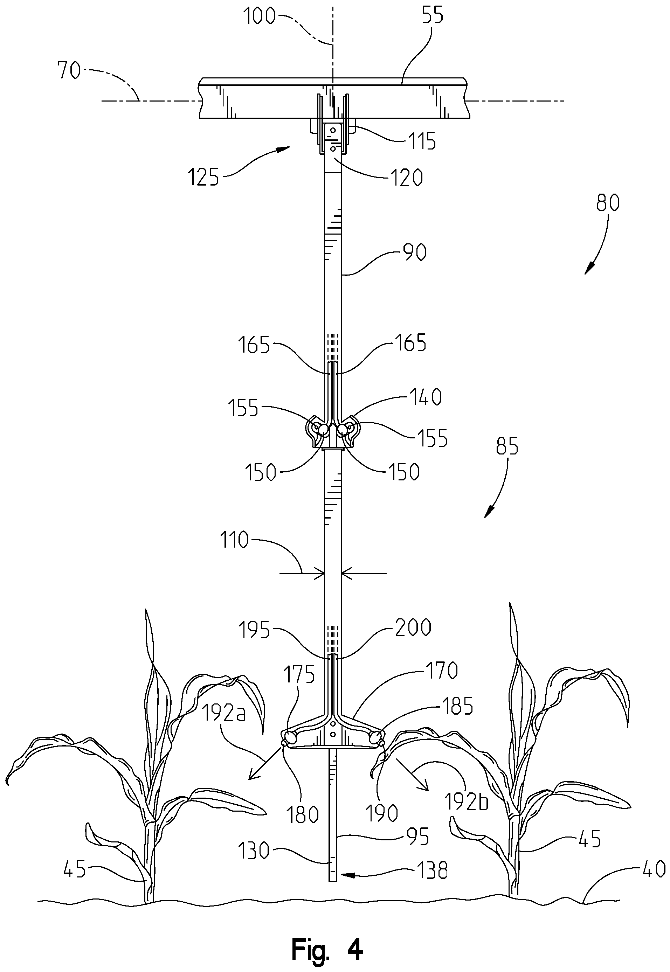

In FIGS. 3 and 4 of the present disclosure, one implementation of a drop-down applicator assembly 80 is shown. In this implementation, the applicator assembly 80 may include a resilient or flexible frame 85 having a body 90 (e.g., a first portion) coupled to the support boom 55 and a foot 95 (e.g., a second portion) coupled to the body 90. The body 90 may be formed along a central axis 100 that is substantially linear while the frame 85 is in a default or relaxed position (FIG. 3). In other implementations, the central axis 100 can include at least one curvature while the frame 85 is in the default position. In addition, the body 90 may be formed of as a strip of material having a rectangular cross section in a plane transverse to the central axis 100. For example, a thickness 105 of the body 90 may be less than a width 110 of the body 90, where the thickness 105 is measured in a direction parallel to the forward and rearward directions 50, 52, and the width 110 is measured in a direction parallel to the longitudinal axis 70 of the support boom 55. As a result, the body 90 of the applicator assembly 80 is bendable/resilient in the forward and rearward directions 50, 52 but is substantially rigid in the direction transverse to the forward and rearward directions 50, 52.

In the implementation of FIGS. 3 and 4, the drop-down applicator is mechanically connected to the support boom 55. As shown, a mount or clamp 115 is directly coupled to the support boom 55 and the body 90. The mount or clamp 115 is adjustable to clamp onto different sized support booms 55. The mount 115 is also selectively coupled to the support boom 55 enabling the applicator assembly 80 to be selectively coupled to the support boom 55. A top portion 120 of the body 90 that interfaces with the mount 115 is rigidly coupled to the mount 115 such that the top portion 120 cannot pivot relative to the support boom 55. As such, the frame 85 is non-pivotably coupled to the support boom 55. The interface between the body 90 and the mount 115 defines a coupling location 125. In further implementations, the mount 115 can be fixed to the support boom 55 by, for example, a welding process in which the applicator assembly 80 is non-removably coupled to the support boom 55.

The foot 95 may be designed as including an oval or teardrop shape member and includes an outer surface 130 having an end or apex 132, a front curved side 135, and a rear curved side 138. In some implementations, the outer surface 130 of the foot 95 may be configured to contact the ground 40. In several implementations, the outer surface 130 of the foot 95 is not configured to contact the ground 40. In other implementations, the foot 95 can include a different shape. In one implementation, the foot 95 is selectively coupled to and replaceable from the body 90 as the foot 95 is a wear component that engages the ground 40.

In the implementation of FIGS. 3 and 4, an upper bracket 140 may be coupled to the body 90 and supports upper spray nozzles 150 each having an outlet 155. The upper bracket 140 may be slidably adjustable to selectively position the spray nozzles 150 along the central axis 100 of the body 90. The spray nozzles 150 may also be adjustable relative to the upper bracket 140 to change an angle at which the outlets 155 are oriented (e.g., to change a dispensing direction of the outlets 155 relative to the upper bracket 140). With reference to FIG. 4, upper nozzle lines 165 are coupled between the upper spray nozzles 150 and a first product tank 30a to provide fluid communication between the first product tank 30a and the upper spray nozzles 150. In other implementations, the upper spray nozzles 150 can be in fluid communication with a second product tank 30b, or each upper spray nozzle 150 can be in fluid communication with a different product tank 30a, 30b.

In FIGS. 3 and 4, a lower bracket 170 may be coupled to the body 90 adjacent the foot 95 and supports a first lower spray nozzle 175 having a first lower outlet 180 and a second lower spray nozzle 185 having a second lower outlet 190. In other implementations, the lower bracket 170 can be coupled to the foot 95. The spray nozzles 175, 185 may be adjustable relative to the lower bracket 170 to change dispensing directions 192a, 192b of the outlets 180, 190 (see FIG. 4). For example, the spray nozzles 175, 185 may be manually pivotable relative to the lower bracket 170 to change the dispensing directions 192a, 192b of the outlets 180, 190. In other implementations, the spray nozzles 175, 185 can be electronically adjusted by an operator within the cab 25 of the sprayer 10 or automatically adjusted by a control processor to change the dispensing directions 192a, 192b of the outlets 180, 190.

A first lower nozzle line 195 may be coupled to the first lower spray nozzle 175 and the second product tank 30b to provide fluid communication between the second product tank 30b and the first lower spray nozzle 175. Likewise, a second lower nozzle line 200 is coupled to the second lower spray nozzle 185 and the second product tank 30b to provide fluid communication between the second product tank 30b and the second lower spray nozzle 185. In other implementations, the first and second lower spray nozzles 175, 185 can be in fluid communication with the first product tank 30a, or each spray nozzle 175, 185 can be in fluid communication with a different product tank 30a, 30b.

In operation, the sprayer 10 moves into an agricultural field such that each applicator assembly 80 is positioned between adjacent crop rows with the support boom 55 in a raised position. As such, the applicator assemblies 80 may be spaced from the ground 40 in the default position with the central axis 100 of each applicator assembly 80 extending substantially perpendicular to the ground 40.

In the implementation of FIGS. 3 and 4, the applicator assembly 80 is shown being coupled to the agricultural sprayer 10 in two separate connections. First, the applicator assembly is mechanically connected to the agricultural sprayer 10 via the mount or clamp 115 to the support boom 55. Second, a separate fluid connection between the applicator assembly 80 and one of the product tanks 30 is via one or more nozzle lines 165, 195, 200. In some implementations, one or more latch pins may be used to mechanically connect the applicator assembly to the support boom or agricultural sprayer 10. Separate fluid connections are provided for connecting the product tank to the respective applicator assembly. The separate fluid connections may be achieved via a nozzle body to hose adapter.

The conventional latch pin or mechanical connection used to connect applicator assemblies to the agricultural sprayer often require time and effort to connect and/or disconnect the applicator assembly to the sprayer. Further, the conventional fluid connection often results in a loss of product when the applicator assembly is disassembled from the sprayer. Moreover, the conventional fluid connection is not designed to reduce or prevent debris and other contaminants from entering the fluid connection. Debris and other contaminants can plug hoses and other fluid lines which reduces the efficiency of supplying product from the product tank to the applicator assembly.

In the present disclosure, there is a desire to provide a quicker manner in which a drop-down applicator assembly is coupled to and removed from a support boom or other structure of an agricultural machine. More specifically, in the present disclosure, one or more implementations are disclosed that provide a quick connection assembly that couples a drop-down applicator assembly to a support boom or tube of an agricultural machine and that combines both a mechanical interface and a product interface (e.g., a solution or fluid interface) into a single connection. Moreover, the one or more implementations include an anti-rotation mechanism to maintain the drop-down applicator assembly in a constant orientation with respect to a direction of travel. Thus, in these one or more implementations, a coupling system is disclosed that provides the connections (mechanical, fluid, etc.) for an applicator assembly to the agricultural machine in a single assembly.

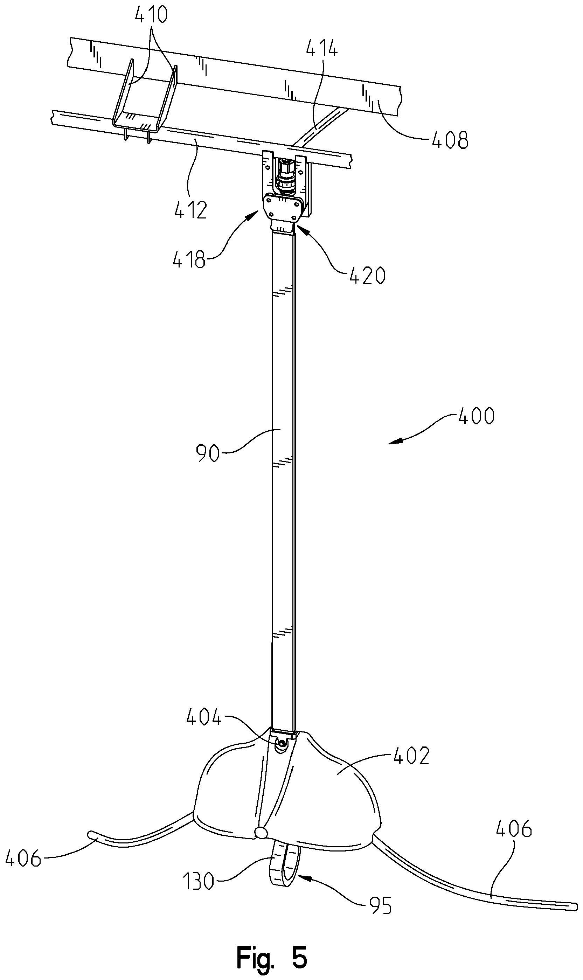

Referring to FIG. 5 of the present disclosure, a drop-down applicator assembly 400, or applicator assembly, is shown. The applicator assembly 400 may be similarly structured and designed as the applicator assembly 80 of FIGS. 1-4. For example, the applicator assembly 400 may include a frame 85 having a first portion (e.g., a body 90) and a second portion (e.g., a foot 95). The second portion 95 is coupled towards a bottom end of the first portion 90 at a coupling location 404. At the bottom end thereof, a cover 402 assembly may be coupled to the first portion 90 or second portion 95 (e.g., at the coupling location 404). The cover assembly 402 may partially enclose one or more nozzles or nozzle bodies. Further, a hose 406 (e.g., a drag hose) may be coupled to each of the one or more nozzles or nozzle bodies.

At an opposite end, the applicator assembly 400 may be coupled to an agricultural machine (e.g., agricultural sprayer). In FIG. 5, the applicator assembly 400 is shown being coupled to a boom structure 408. More specifically, however, the applicator assembly 400 is shown being coupled directly to a fluid tube or spray bar 412 that is configured to supply fluid or other product such as a liquid product to each applicator assembly. For purposes of this disclosure, the terms "fluid" or "product" may refer to any liquid or dry/solid product (e.g., liquid fertilizer, liquid pesticide, liquid fungicide, dry/solid forms of nutrients, dry/solid forms of protection products, agricultural seeds, etc.). Moreover, the fluid tube or spray bar 412 may be configured to supply or transport the fluid or product therethrough to each applicator assembly 400.

In the implementation of FIG. 5, the fluid tube 412 may function as a mounting tube to which the applicator assembly 400 is coupled. In some implementations, the fluid tube 412 may be coupled to the boom structure 408 via one or more support members 410. In another implementation, the fluid tube 412 may be clamped, bolted, or otherwise mechanically coupled to the boom structure 408. In some implementations, the boom structure 408 may be similar to the support boom 55 of FIGS. 1-4. In a few implementations, the fluid tube 412 may be coupled directly to the boom structure 408. In other implementations, the fluid tube 412 may be separate and positioned offset from the boom structure 408. While clamping, bolting, and other examples have been provided for coupling the fluid tube 412 to the boom structure 408, in other implementations a separate mounting assembly may be used for coupling the fluid tube 412 to the boom structure 408.

In any event, the implementation of coupling the applicator assembly 400 to the fluid tube 412 may reduce the overall weight of the assembly and/or provide additional capacity. In the latter instance, nitrogen may be applied while a fungicide is sprayed with a dual product unit.

As shown in FIG. 5, an anti-rotational, quick connect dual coupler assembly 418 is coupled between the applicator assembly 400 and the fluid tube 412. The use of the anti-rotational, quick connect dual coupler assembly 418 allows the applicator assembly 400 to be coupled or de-coupled from the agricultural machine in less time than conventional applicator assemblies. Moreover, the anti-rotational, quick connect dual coupler assembly 418 is able to reduce or prevent product losses when the applicator assembly 400 is coupled or removed from the agricultural machine, and fluid connections are better sealed thereby reducing contamination from debris and other contaminants. In this implementation, the anti-rotational, quick connect dual coupler assembly 418 may include a joint that secures the applicator assembly 400 to the fluid tube 412 while also providing a fluid connection with a product tank that supplies the fluid or product. This dual connection therefore provides a mechanical connection to the fluid tube 412 (or support boom, agricultural machine, etc.) as well as a fluid or product connection for receiving the fluid or product from a product tank. In other words, where conventional applicator assemblies included separate connections, the anti-rotational, quick connect dual coupler assembly 418 of FIG. 5 combines multiple connections into a single connection to the agricultural machine. Further, the anti-rotational, quick connect dual coupler assembly 418 does not include a latch pin or other secondary mechanical connection for coupling the applicator assembly 400 to the agricultural machine.

As shown in FIG. 5, the applicator assembly 400 may be coupled to the anti-rotational, quick connect dual coupler assembly 418 at a coupling location 420. This coupling location 420 is described in further detail below. As also shown, a supply line 414 may be fluidly coupled to the fluid line 412 and/or the anti-rotational, quick connect dual coupler assembly 418 for supplying product to the applicator assembly 400.

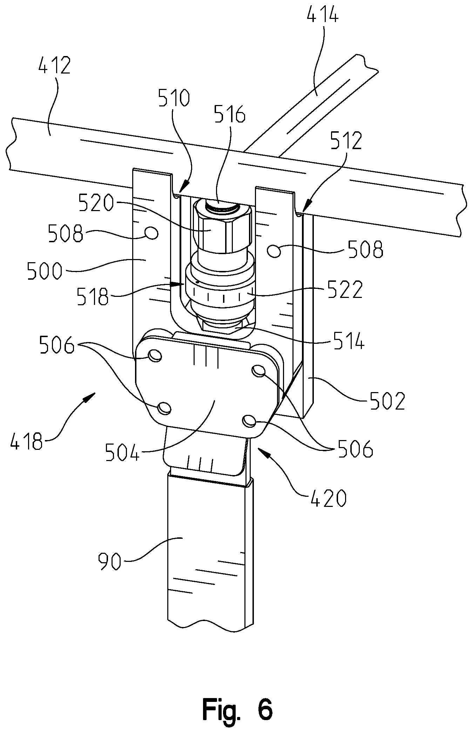

Referring to FIG. 6, one implementation of the anti-rotational, quick connect dual coupler assembly 418 is shown in greater detail. Here, the coupler assembly 418 may include an anti-rotational mechanism that may couple or be in close proximity to the fluid tube 412 during assembly. The anti-rotational mechanism is configured to prevent the coupler assembly 418 from rotating during operation and therefore maintains the orientation of the applicator assembly 400 during a spraying or work operation. In FIG. 6, the anti-rotational mechanism induces or provides an interference connection with the fluid tube 412. In particular, the anti-rotational mechanism may include a plurality of components including a first bracket portion 500, a second bracket portion 502, and a third bracket portion 504. A plurality of openings 506 in the third bracket portion 506 are shown in FIG. 6. Although not shown, fasteners may be coupled in each of the plurality of openings 506 to couple the body 90 of the applicator assembly 400 to the coupler assembly 418. Further, the fasteners may couple the third bracket portion 504 to at least the first bracket portion 500. In some implementations, the second bracket portion 502 may also be coupled to the first and third bracket portions 500, 504 via the fasteners.

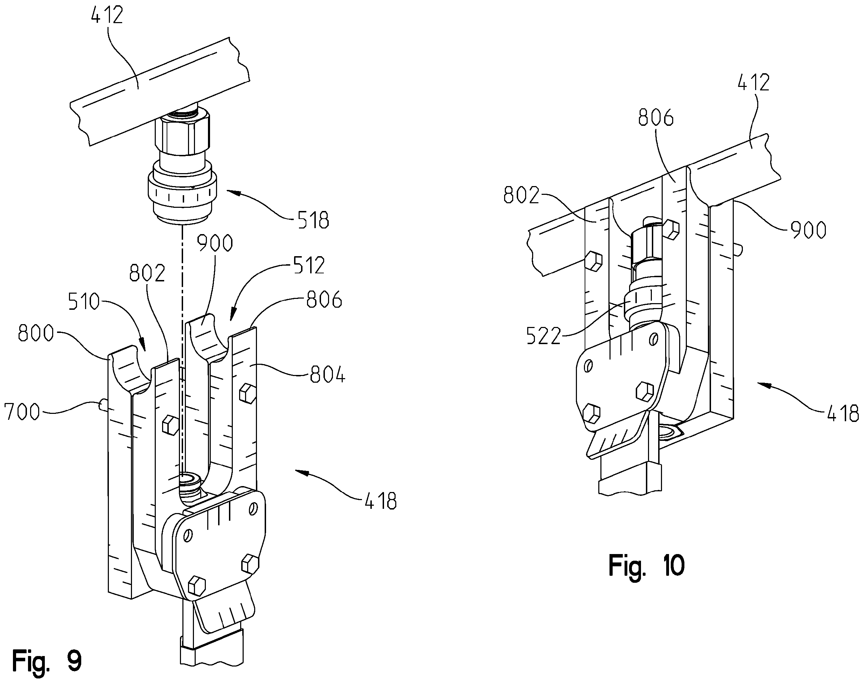

The first bracket portion 500 and second bracket portion 502 may be coupled to one another via fasteners that coupled through a second set of openings 508. The first bracket portion 500 and second bracket portion 502 may form any shape including U-shaped, V-shaped, oval-shaped, circular-shaped, C-shaped, etc. In the implementation of FIG. 6, the first bracket portion 500 and the second bracket portion 502 of the anti-rotational mechanism are substantially U-shaped members. As best shown in FIGS. 9 and 10 of the present disclosure, the first and second bracket portions may include fingers extending in a direction towards the fluid tube 412. When the first bracket portion 500 and the second bracket portion 502 are coupled to one another, a first recessed end 510 and a second recessed end 512 are formed therebetween. The first bracket portion 500 may include a first finger 802 and a second finger 804. The first finger 802 and the second finger 804 may include a tip or end 806 that forms a catch portion. The second bracket portion 502 may include a third finger 804 and a fourth finger 900. The third finger 804 and the fourth finger 900 may also include tips or ends 806 that form catch portions. The catch portions may extend or protrude inwardly towards the recessed ends 510, 512.

When coupling the coupler assembly 418 to the fluid tube 412, the fluid tube 412 may be disposed within the first recessed end 510 and the second recessed end 512. As the fluid tube 412 is positioned within each recessed end, the fingers may be pliable or flexible in that each finger may slightly bend outwardly to allow the fluid tube 412 to be disposed in each recessed end. Moreover, once the fluid tube 412 is positioned within each recessed end, each of the fingers may bias or return to a normal, rest position such that the catch portions of each finger may contact an outer surface of the fluid tube 412. The catch portions at each end 806 of each finger may provide a mechanical connection between the applicator assembly 400 and the fluid tube 412.

In some implementations, the fluid tube 412 may be removably coupled via a snap-fitted, clamped or clipped connection into each recessed end 510, 512 formed by the first and second bracket portions. In another implementation, a fastener may be used for coupling the fluid tube 412 to the recessed portions. In other implementations, a latch or other coupling device may be used for coupling the anti-rotational mechanism to the fluid tube 412. In any event, once the fluid tube 412 is coupled to the anti-rotation mechanism, the applicator assembly 400 is held against rotating relative to the fluid tube 412 due to the interaction between the fluid tube 412 and the first and second recessed ends 510, 512.

In FIGS. 6, 9 and 10, the recessed ends 510, 512 are shown to have a substantially U-shaped opening for receiving the fluid tube 412. In other implementations, the recessed ends may have a cross-section of an open-ended rectangle, square, circle, triangle, oval, or any type of polygon. The cross-sectional shape of the recessed end may be formed based on the cross-sectional shape of the fluid tube 412 in order to provide a secure connection thereto. In some implementations, the anti-rotational mechanism forms a press-fit connection to the fluid tube 412. In other implementations, the anti-rotational mechanism forms a lock-fit connection to the fluid tube 412. Regardless of the type of connection, the anti-rotational mechanism is configured to prevent the applicator assembly 400 from rotating about the fluid tube 412 and relative to the direction of travel.

In one implementation, the anti-rotational mechanism may be formed via an injection molding process. In another implementation, the anti-rotational mechanism may be formed by a machining process. The anti-rotational mechanism may be formed of polypropylene (e.g., glass-filled polypropylene), a plastic, aluminum, or other durable, light-weight material. In other implementations, a portion of the anti-rotational mechanism may be formed of fiberglass. In some implementations, the anti-rotational mechanism may be formed as a single part (unlike that of FIG. 6). In yet other implementations, the anti-rotational mechanism may be formed as two or more separate components (e.g., the first, second, and third bracket portions of FIG. 6). The anti-rotational mechanism desirably includes properties that allows the anti-rotational mechanism to be robust enough to withstand torsion and other forces when the applicator assembly contacts an object such as the ground, and yet be light weight so that a plurality of applicator assemblies may be coupled to the agricultural machine (e.g., the boom).

Referring to the implementation of FIG. 6, the anti-rotational, quick connect dual coupler assembly 418 also includes a mechanism for a sealed connection between the applicator assembly 400 and the fluid tube 412 that reduces leakage of product when the applicator assembly is being coupled to or removed from the fluid tube 412. In particular, the coupler assembly 418 may include a first fluid coupler 514 and a second fluid coupler 516. The second coupler 516 may include a boss welded to the fluid tube 412. The first coupler 514 and the second coupler 516 may include external threads. In other implementations, only the second coupler 516 may include external threads.

The coupler assembly 418 may also include a female coupler portion 518. The female coupler portion 518 may include a first end that may be coupled to the second fluid coupler 516. For example, in the illustrated implementation, the female coupler portion 518 may include a coupler body 520 having internal threads for engaging with the second fluid coupler 516. In this manner, the female coupler portion 518 may be directly fluidly coupled to the fluid tube 412. In some implementations, the female coupler portion 518 may be threadedly coupled to the fluid tube 412. In other implementations, the female coupler portion 518 may be welded or mechanically coupled to the fluid tube 412. In yet another implementation, the female coupler portion 518 may be coupled to the fluid tube 412 in a non-threadedly coupled manner.

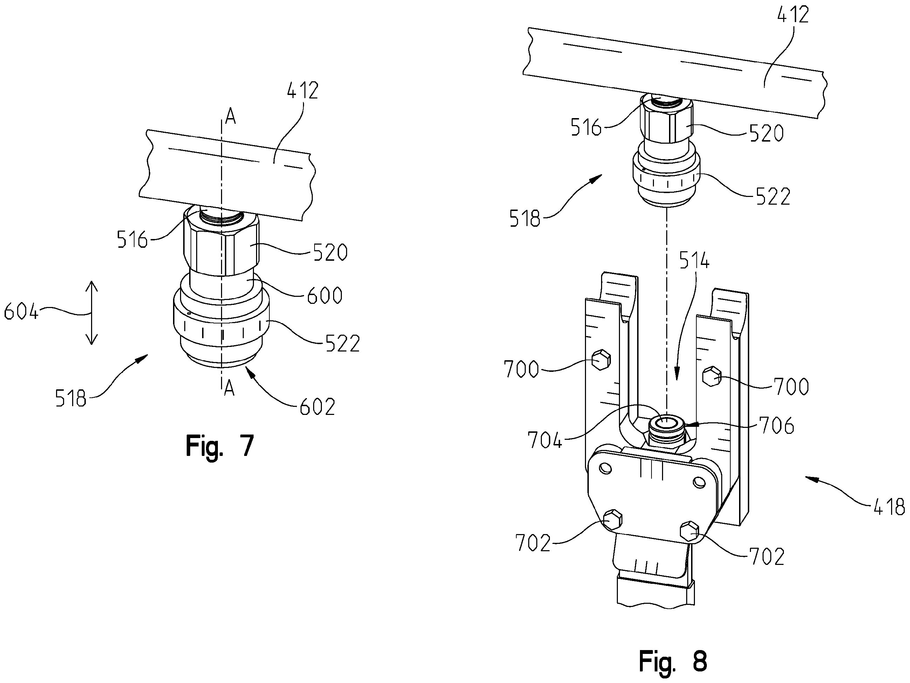

The female coupler portion 518 may also include a collar 522 that is movable or slidable in a direction 604 along an axis A-A (FIG. 7) relative to and along the coupler body 520. The axis A-A may correspond in some implementations with axis 100 of FIGS. 3 and 4. As shown in FIG. 7, the collar 522 may move axially along a post 600 that is part of the coupler body 520. The collar 522 may include internal threads for coupling to the first fluid coupler 514. As it does, the interconnection between the female coupler portion 518 and the first fluid coupler 514 forms a fluid connection 602.

In some implementations, the first fluid coupler 514 may form a male coupler portion 704. In FIG. 8, for example, the male coupler portion 704 extends from the anti-rotational mechanism and is coupled to the applicator assembly 400. The coupler assembly 418 may thus incorporate the female coupler portion 518 and the male coupler portion 704 to establish the aforementioned fluid connection 602. To better understand the fluid connection 602, the female coupler portion 518 may be retained within a housing that forms a receptacle. The receptacle (not shown) may define a cavity having an inlet port (not shown), an outlet port (not shown), and an open bore located at one end thereof. The male coupler portion 704 may be inserted into the receptacle of the female coupler portion 518 during assembly.

Further, the female coupler portion 518 may include a movable seat positioned between the receptacle and the open bore. The movable seat may mate with a surface (e.g., a flat, smooth surface) of a main poppet valve (not shown) that is located in the cavity. The main poppet valve may be normally biased (e.g., via a spring) to a closed position against the movable seat. During assembly, the male coupler portion 704 may be inserted into the bore of the female coupler portion 518. The male coupler portion 704 may also form an inlet opening that fluid couples to the outlet opening of the female coupler portion 518. A check valve (not shown) is movably displaced in the inlet opening of the male coupler portion 704. The check valve may include a substantially flat, outer end surface that is configured to mate with the end surface of the main poppet valve. As the end surface of the check valve comes into contact with the end surface of the main poppet valve, a flush surface connection is achieved which reduces or prevents the leakage of fluid or product from the coupler assembly 418.

During assembly, the collar 522 may be moved into engagement with the male coupler portion 704. As the collar 522 engages and couples with the male coupler portion 704, a mechanical connection is established between the fluid tube 412 and the applicator assembly 400. To facilitate this connection, the collar 522 may include one or more spring-biased bearings or balls. When the female coupler portion 518 and the male coupler portion 704 are engaged with one another, the one or more bearings (not shown) may become lodged within a groove 706 formed in the male coupler portion 704 to achieve the mechanical connection. In some instances, the collar 522 may be pressed downwardly with sufficient force to lodge the one or more bearings into the groove 706. Similarly, when decoupling the applicator assembly 400 from the fluid tube 412, the collar 522 may be moved upwardly or axially away from the male coupler portion 704 to dislodge the one or more bearings from the groove 706.

In some implementations, the coupler assembly 418 is a banjo fitting. One example of a banjo fitting is a WHK series banjo fitting manufactured by Parker Hannifin Corporation (https://www.parker.com). In other implementations, a keyed collar or cam latch style fitting may be used as part of the coupler assembly 418. In this example, one or more cam latches may engage within a groove or slot. One example of a cam latch style fitting may be an Earl's Performance Staubli SPH Twist Lock Dry Break Coupling (https:// www.summitracing.com/parts/ear-je271104erl#overview). In yet other implementations, a twist lock fitting may be used as part of the coupler assembly 418. For example, a threaded dripless connection may incorporate a coarse thread such that a collar is rotated about the coarse thread to establish the fluid connection.

In some implementations, the fitting (e.g., banjo, keyed collar, cam latch, or twist lock) may be formed as an injection molded fitting with the coupler assembly 418. In other implementations, the fitting may be separate from the coupler assembly 418.

In several implementations, the collar 522 is a spring-released locking detent collar that is coupled to an outer shell or body 520 of the female coupler portion 518. In some implementations, a tool may be used to engage the collar 522 (or locking ring) and move the collar 522 to either couple or release the applicator assembly 400 to or from the agricultural machine. The collar 522 allows for a quick connection and quick release that may be achieved from the ground and without the use of a ladder or platform when connecting or disconnecting the applicator assembly from the agricultural machine. Further, this type of connection may allow for the connection or disconnection of the applicator assembly when the spray boom is in a folded, partially folded, or unfolded configuration.

In some implementations, the anti-rotational mechanism may be integrated into the fluid connection between the female coupler portion 518 and the male coupler portion 704. In other implementations, the anti-rotational mechanism may be provided by the design of the application assembly. In several implementations, the connection between the applicator assembly and the fluid tube 412 may form an anti-rotational connection.

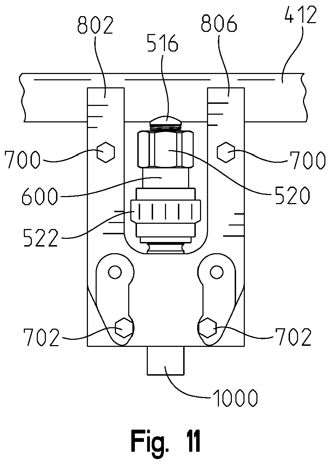

Referring to FIG. 11 of the present disclosure, an outlet fluid coupler 1000. The outlet fluid coupler 1000 may be in fluid communication with the male coupler portion 704 for receiving fluid or product from the female coupler portion 518. The fluid or product may flow through the outlet fluid coupler 1000 and into one or more hoses or lines (e.g., nozzle lines 165, 195, 200) to be dispensed onto the ground or crops in a field. In other implementations, the applicator assembly 400 may include a tube, pipe, or other hose that is coupled to the outlet fluid coupler 1000 (or directly to the male coupler portion 704). The tube, pipe, or other hose may be configured to facilitate the transport of fluid or product to nozzles, nozzle bodies, drip hoses, or drag hoses of the applicator assembly 400. In some examples, the fluid connection between the male coupler portion 704 and the nozzles, nozzle bodies, drip hoses, drag hoses, etc. may be incorporated into or coupled to the frame 85 of the applicator assembly 400. For example, the frame 85 may be sized to define an internal channel for transporting the fluid or product.

In the implementation of FIG. 8, a first fastener 700 is shown inserted into the second set of openings 508 for coupling the first bracket portion 500 and the second bracket portion 502 to one another. A second fastener 702 is also shown inserted into the first set of openings 506 for coupling the first bracket portion 500, the second bracket portion 502, and the third bracket portion 504 to one another.

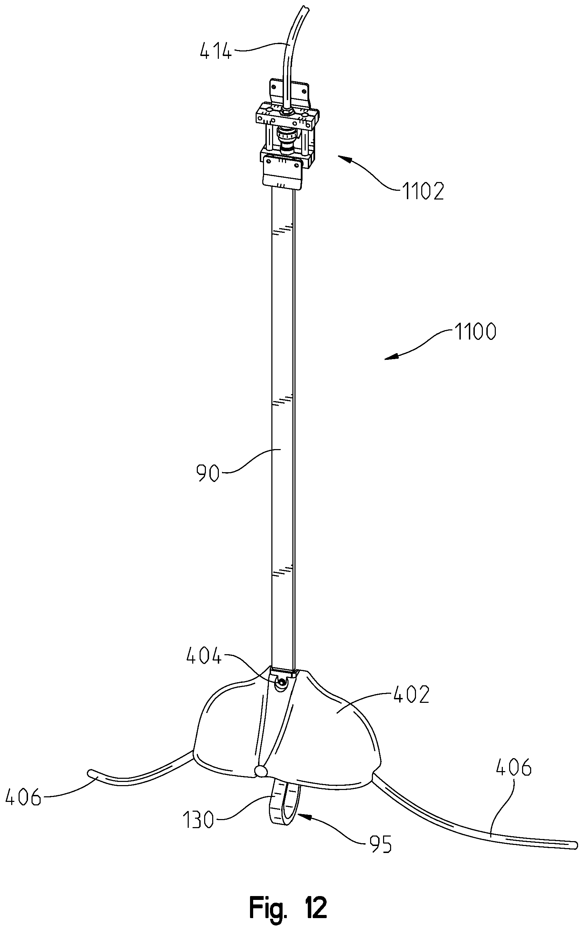

Referring now to FIGS. 12-14 of the present disclosure, another implementation of an applicator assembly 1100 is illustrated. In this implementation, the applicator assembly 1100 is similar structured to the applicator assembly 400 of FIG. 5. For example, the applicator assembly 1100 includes an anti-rotational coupling mechanism 1102 as shown.

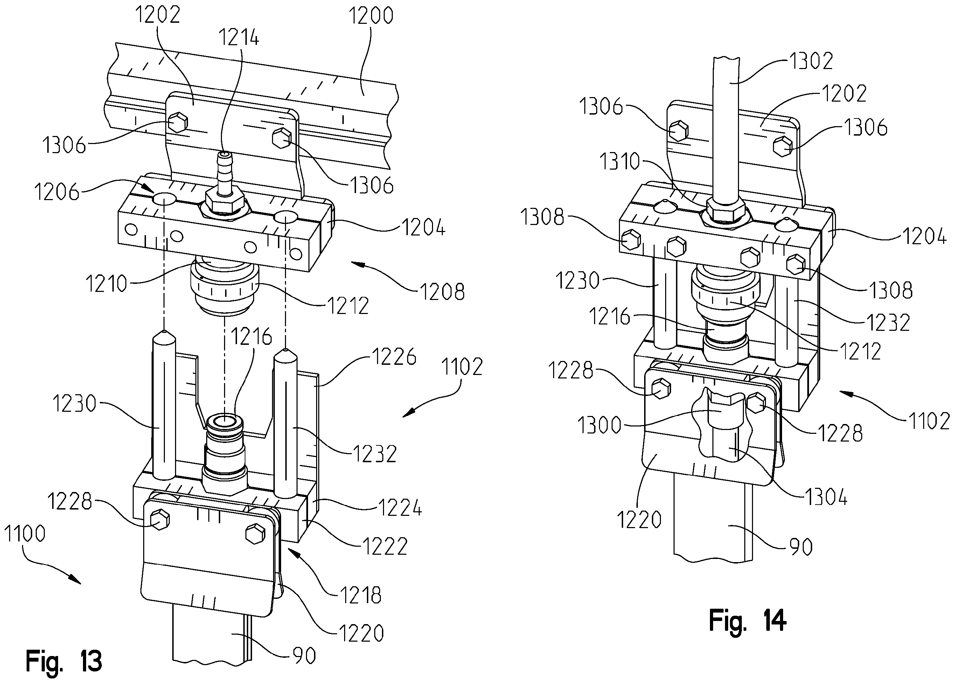

As shown in FIG. 13, the applicator assembly 1100 may be coupled to a support bar, mounting tube, fluid tube, spray boom, boom structure, or other member of an agricultural machine. In FIG. 13, a spray boom 1200 is shown to which the applicator assembly 1100 is coupled. A support bracket 1202 and support flange 1204 may couple a quick connect anti-rotational coupler assembly 1208 to the spray boom 1200. The support bracket 1202 may be coupled to the spray boom 1200 via one or more fasteners 1306 (see FIG. 14). The support flange 1204 may be coupled to the support bracket 1202 via another one or more fasteners 1308 (see FIG. 14).

The coupler assembly 1208 may be similar to the coupler assembly 418 of FIG. 5. The coupler assembly 1208 may include a first coupler 1210 such as a banjo coupler or fitting similar to the one shown in FIG. 6. The coupler 1210 may include a female coupler portion similar to the female coupler portion 518 of FIG. 6. A collar 1212 may be movable coupled to the first coupler 1210. The collar 1210 may further couple to a male coupler portion of a second coupler 1216. The male coupler portion may be similar to the male coupler portion 704 of FIG. 8. A fluid fitting 1214 may be coupled to an end of the fluid coupler 1210 opposite the collar 1212. A hose or other tube for supplying fluid or product to the applicator assembly 1100 may be coupled to the fluid fitting 1214 in this implementation. The manner in which the first coupler 1210 and the second coupler 1216 are coupled to one another may be similar to that described above with respect to the female coupler portion 518 and male coupler portion 704.

The anti-rotational coupling mechanism 1102 of FIGS. 12-14 may be different from that described above with respect to FIG. 5. In particular, the anti-rotational coupling mechanism 1102 may include an anti-rotational mechanism that maintains the application assembly 1100 in a desired orientation with respect to a direction of travel. In particular, the anti-rotational mechanism may be coupled to the applicator assembly 1100 at a coupling location 1218 as shown in FIG. 13. Moreover, the anti-rotational mechanism may include a first plate 1220, a first bracket portion 1222, a second bracket portion 1224, a second plate 1226, a first pin 1230 and a second pin 1232. The first plate 1220, the second plate 1226, the first bracket portion 1222, and the second bracket portion 1224 may be coupled to one another as an assembly via one or more fasteners 1228.

The first bracket portion 1222 and the second bracket portion 1224 may form recesses in which the first pin 1230 and the second pin 1232 are coupled between the respective bracket portions. The first pin 1230 and the second pin 1232 may be press-fit, snap-fit, threaded, welded, glued, or coupled via one or more fasteners to the first bracket portion 1222 and the second bracket portion 1224. In some implementations, the anti-rotational mechanism including the first pin 1230 and the second pin 1232 may be injection molded as a single cast body. In one implementation, the first pin 1230 and the second pin 1232 may be formed of fiberglass. In any event, the first pin 1230 and the second pin 1232 may extend from the first and second bracket portions (e.g., in an upward direction as shown in FIG. 13).

To preclude or reduce rotational movement of the applicator assembly 1100 relative to the boom 1200, the support flange 1204 may include a pair of openings 1206 formed therein. During assembly, the first pin 1230 may be disposed within one of the pair of openings 1206 and the second pin 1232 may be disposed within the other of the pair of openings 1206. This is shown in the implementation of FIG. 14. In one implementation, the first and second pins may slide into and out of the openings 1206 during assembly and/or disassembly. In another implementation, the first and second pins may be press fit, snap fit, clamped, or coupled to the support flange 1204. In several implementations, the first and second pins may be removably coupled with the support flange 1204 but establish a connection therewith that maintains the applicator assembly 1100 in a substantially constant orientation with respect to the direction of travel and the agricultural machine.

In FIG. 14, a fluid coupler 1300 is shown in fluid communication with the second coupler 1216. The fluid coupler 1300 may be further coupled to a delivery line 1304, e.g., a hose, pipe, tube, etc., for delivering fluid or product to be dispensed by the applicator assembly 1100. The male coupler portion of the second coupler 1216 may be directly coupled to the fluid coupler 1300 in some implementations.

In the illustrated implementation of FIG. 14, a supply line 1302, e.g., a hose, pipe, tube, etc., may be in fluid communication with the first coupler 1210 via the fluid fitting 1214 and a second fluid coupling 1310. In some implementations, the second fluid coupling 1310 may be a nozzle body. The supply line 1302 may be fluidly coupled to a product tank that stores the fluid or product to be dispensed by the applicator assembly 1100. In some implementations, the supply line 1302 may be fluidly coupled to a spray or fluid tube similar to the fluid tube 412 of FIG. 5. In other implementations, the supply 1302 may be directly fluidly coupled to a pump or other mechanism that supplies the fluid or product to the supply line 1302.
While exemplary implementations incorporating the principles of the present disclosure have been described herein, the present disclosure is not limited to such implementations. Instead, this application is intended to cover any variations, uses, or adaptations of the disclosure using its general principles. Further, this application is intended to cover such departures from the present disclosure as come within known or customary practice in the art to which this disclosure pertains.

Embodiments of the invention can be described with reference to the following numbered clauses, with preferred features laid out in dependent clauses:
1. An agricultural machine moveable across a surface in a travel direction, comprising:
   a chassis;
   a product tank coupled to the chassis, the product tank configured to store a product;
   a support boom coupled to the chassis;
   an applicator assembly comprising a frame and at least one nozzle, the frame having a first portion and a second portion, wherein the second portion is configured to be positioned in contact with or above the surface; and
   a coupler assembly coupled between the support boom and the first portion of the applicator assembly, the coupler assembly comprising a first coupler portion and a second coupler portion;
   wherein the first coupler portion is coupled to the support boom and comprises a female component and a collar, wherein the first coupler portion is in communication with the product tank;
   wherein the second coupler portion comprises a male component;
   wherein, during assembly, the male component is inserted into the female component and the collar engages with the male component to mechanically couple the applicator assembly to the support boom and fluidly couple the nozzle to the product tank;
   wherein, the coupler assembly is configured to limit rotational movement between the first coupler portion and the second coupler portion.
2. The agricultural machine of clause 1, wherein the second coupler portion comprises an anti-rotational mechanism, the anti-rotational mechanism being coupled to the support boom to maintain an orientation of the application assembly with respect to the travel direction.
3. The agricultural machine of clause 1, wherein the anti-rotational mechanism comprises a plurality of fingers that form a first recess and a second recess, the support boom being positioned within the first recess and the second recess when the anti-rotational mechanism is coupled to the support boom.
4. The agricultural machine of clause 1, wherein the support boom is coupled to the support boom with a press-fit, a snap-fit, or clamped connection.
5. The agricultural machine of clause 1, wherein the anti-rotational mechanism comprises a first bracket portion and a second bracket portion, the first bracket portion and the second bracket portion being coupled to the support boom.
6. The agricultural machine of clause 5, wherein the first bracket portion and the second bracket portion are coupled to one another.
7. The agricultural machine of clause 1, wherein the male component and the anti-rotational mechanism comprise an injection molded part.
8. The agricultural machine of clause 1, wherein the collar is movable in an axial direction defined along the first coupler portion and is rotatable about the female component.
9. The agricultural machine of clause 1, further comprising:
   a support flange coupled to the support boom, the support flange comprising a first opening and a second opening defined therein;
   the anti-rotational mechanism comprising a first pin and a second pin;
   wherein, when the applicator assembly is coupled to the support boom, the first pin is disposed within the first opening and the second pin is disposed within the second opening;
   wherein the interconnection between the first pin and the second pin with the support flange maintains the orientation of the applicator assembly with respect to the travel direction.
10. The agricultural machine of clause 1, further comprising:
   a first fluid line fluidly coupled between the product tank and the first coupler portion; and
   a second fluid line fluidly coupled between the second coupler portion and the at least one nozzle.
11. An applicator assembly configured to be coupled to a support boom of an agricultural machine that is moveable across a surface in a travel direction, the agricultural machine comprising a product tank for storing a product, the applicator assembly comprising:
   a frame having a first portion and a second portion, the second portion configured to be positioned in contact with or above the surface;
   a nozzle configured to be in fluid communication with the product tank; and
   a coupler assembly configured to be coupled between the support boom and the frame, the coupler assembly comprising a first coupler portion and a second coupler portion;
   wherein the first coupler portion is configured to be coupled to the support boom, the first coupler portion comprising a female component and a locking component, wherein the first coupler portion is configured to be in communication with the product tank;
   wherein the second coupler portion is coupled to the frame, the second coupler portion comprising a male component;
   wherein, the applicator assembly is configured to be mechanically and fluidly coupled to the agricultural machine when the male component is inserted into the female component and the locking component engages with the male component;
   wherein, the coupler assembly is configured to limit rotational movement between the first coupler portion and the second coupler portion.
12. The applicator assembly of clause 11, wherein the coupler assembly comprises an anti-rotational mechanism configured to be coupled to the support boom of the agricultural machine to maintain an orientation of the applicator assembly with respect to the travel direction.
13. The applicator assembly of clause 11, wherein the anti-rotational mechanism is coupled to the frame.
14. The applicator assembly of clause 11, wherein the anti-rotational mechanism comprises a plurality of fingers that form a first recess and a second recess, the anti-rotational mechanism configured to be coupled to the support boom by positioning the support boom within the first recess and the second recess.
15. The applicator assembly of clause 11, wherein the anti-rotational mechanism comprises a first bracket portion and a second bracket portion, the first bracket portion and the second bracket portion configured to be coupled to the support boom.
16. The applicator assembly of clause 15, wherein the first bracket portion and the second bracket portion are coupled to one another.
17. The applicator assembly of clause 11, further comprising a fluid line fluidly coupled between the second coupler portion and the nozzle.
18. The applicator assembly of clause 11, wherein the collar is movable in an axial direction defined along the first coupler portion and is rotatable about the female component.
19. A method of coupling an applicator assembly to a support boom of an agricultural machine, the applicator assembly including a frame and at least one nozzle, the method comprising:
   providing a coupler assembly comprising a first coupler portion and a second coupler portion;
   aligning a male component of the second coupler portion with a female component of the first coupler portion;
   inserting the male component into engagement with the female component;
   releasably coupling the first coupler portion to the second coupler portion via a locking component;
   wherein, releasably coupling the first coupler portion to the second coupler portion comprises mechanically coupling the applicator assembly to the support boom and fluidly coupling the at least one nozzle to a product tank on the agricultural machine;
   wherein mechanically coupling the applicator assembly to the support boom limits rotational movement between the first coupler portion and the second coupler portion.
20. The method of clause 19, wherein engaging an anti-rotational mechanism with the support boom maintains an orientation of the applicator assembly with respect to the support boom.

## Claims

1. An agricultural machine (10) moveable across a surface (40) in a travel direction, comprising:
a chassis (15);
a product tank (30) coupled to the chassis (15), the product tank (30) configured to store a product;
a support boom (412, 1200) coupled to the chassis (15);
an applicator assembly (80, 400) comprising a frame (85) and at least one nozzle (65), the frame (85) having a first portion (90) and a second portion (95), wherein the second portion (95) is configured to be positioned in contact with or above the surface (40); and
a coupler assembly (418, 1208) coupled between the support boom (412, 1200) and the first portion (90) of the applicator assembly (400, 1100), the coupler assembly (418, 1208) comprising a first coupler portion (516, 1210) and a second coupler portion (514, 1216);
wherein the first coupler portion (516, 1210) is coupled to the support boom (412, 1200) and comprises a female component (518) and a collar (522), wherein the first coupler portion (516, 1210) is in communication with the product tank (30);
wherein the second coupler portion (514, 1216) comprises a male component (704);
wherein, during assembly, the male component (704) is inserted into the female component (518) and the collar (522) engages with the male component (704) to mechanically couple the applicator assembly (400, 1100) to the support boom (412, 1200) and fluidly couple the nozzle (65) to the product tank (30);
wherein, the coupler assembly (418, 1208) is configured to limit rotational movement between the first coupler portion (516, 1210) and the second coupler portion (514, 1216).

2. The agricultural machine of claim 1, wherein the second coupler portion (514, 1216) comprises an anti-rotational mechanism, the anti-rotational mechanism being coupled to the support boom (412, 1200) to maintain an orientation of the application assembly (400, 1100) with respect to the travel direction.

3. The agricultural machine of claim 1 or claim 2, wherein the anti-rotational mechanism comprises a plurality of fingers (802, 804, 900) that form a first recess (510) and a second recess (512), the support boom (412, 1200) being positioned within the first recess (510) and the second recess (512) when the anti-rotational mechanism is coupled to the support boom (412, 1200).

4. The agricultural machine of any preceding claim, wherein the anti-rotational mechanism is coupled to the support boom (412, 1200) with a press-fit, a snap-fit, or clamped connection.

5. The agricultural machine of any preceding claim, wherein the anti-rotational mechanism comprises a first bracket portion (500) and a second bracket portion (502), the first bracket portion (500) and the second bracket portion (502) being coupled to the support boom (412, 1200).

6. The agricultural machine of claim 5, wherein the first bracket portion (500) and the second bracket portion (502) are coupled to one another.

7. The agricultural machine of any preceding claim, wherein the male component (704) and the anti-rotational mechanism comprise an injection molded part.

8. The agricultural machine of any preceding claim, wherein the collar (522) is movable in an axial direction defined along the first coupler portion (516, 1210) and is rotatable about the female component (518).

9. The agricultural machine of any preceding claim, further comprising:
a support flange (1204) coupled to the support boom (412, 1200), the support flange (1204) comprising a first opening (1206) and a second opening (1206) defined therein;
the anti-rotational mechanism comprising a first pin (1230) and a second pin (1232);
wherein, when the applicator assembly (400, 1100) is coupled to the support boom (412, 1200), the first pin (1230) is disposed within the first opening (1206) and the second pin (1232) is disposed within the second opening (1206);
wherein the interconnection between the first pin (1230) and the second pin (1232) with the support flange (1204) maintains the orientation of the applicator assembly (400, 1100) with respect to the travel direction.

10. The applicator assembly (400, 1100) of claim 1, wherein:
the first coupler portion (516, 1210) is configured to be coupled to the support boom (412, 1200), the first coupler portion (516, 1210) comprising a female component (518) and a locking component (522, 1212), wherein the first coupler portion (516, 1210) is configured to be in communication with the product tank (30);
wherein the second coupler portion (514, 1216) is coupled to the frame (85), the second coupler portion (514, 1216) comprising the male component (704);
wherein, the applicator assembly (400, 1100) is configured to be mechanically and fluidly coupled to the agricultural machine (10) when the male component (704) is inserted into the (518) female component and the locking component (522, 1212) engages with the male component (704);
wherein, the coupler assembly (418, 1208) is configured to limit rotational movement between the first coupler portion (1516, 1210) and the second coupler portion (514, 1216).

11. The applicator assembly of claim 10, wherein the coupler assembly (418, 1208) comprises an anti-rotational mechanism configured to be coupled to the support boom (412, 1200) of the agricultural machine (10) to maintain an orientation of the applicator assembly (400, 1100) with respect to the travel direction.

12. The applicator assembly of claim 10 or 11, wherein the anti-rotational mechanism is coupled to the frame (85).

13. The applicator assembly of one of claims 10-12, further comprising a fluid line (1304) fluidly coupled between the second coupler portion (514, 1216) and the nozzle (65).

14. A method of coupling an applicator assembly (400, 1100) to a support boom (412, 1200) of an agricultural machine (10), the applicator assembly (400, 1100) including a frame (85) and at least one nozzle (65), the method comprising:
providing a coupler assembly (418, 1208) comprising a first coupler portion (516, 1210) and a second coupler portion (514, 1216);
aligning a male component (704) of the second coupler portion (514, 1216) with a female component (518) of the first coupler portion (516, 1210);
inserting the male component (704) into engagement with the female component (518);
releasably coupling the first coupler portion (516, 1210) to the second coupler portion (514, 1216) via a locking component (522);
wherein, releasably coupling the first coupler portion (516, 1210) to the second coupler portion (514, 1216) comprises mechanically coupling the applicator assembly (400, 1100) to the support boom (412, 1200) and fluidly coupling the at least one nozzle (65) to a product tank (30) on the agricultural machine (10);
wherein mechanically coupling the applicator assembly (400, 1100) to the support boom (412, 1200) limits rotational movement between the first coupler portion (516, 1210) and the second coupler portion (514, 1216).

15. The method of claim 14, wherein engaging an anti-rotational mechanism with the support boom (412, 1200) maintains an orientation of the applicator assembly (400, 1100) with respect to the support boom (412, 1200).
